# EUROPÄISCHE PATENTANMELDUNG

(11) **EP 1 577 156 A2**
(43) Veröffentlichungstag der Anmeldung: **21.09.2005**
(21) Anmeldenummer: 05005239.8
(22) Anmeldetag: 10.03.2005
(51) Int. Cl.: B60N 2/52, B60N 2/54

(54) **Fahrzeugsitz für ein Nutzfahrzeug**

(30) Priorität: 17.03.2004 DE 102004013395
(71) Anmelder: DaimlerChrysler AG, 70567 Stuttgart (DE)
(72) Erfinder: Kern, Simon, 60528 Frankfurt (DE); Maas, Jürgen, 65779 Kelkheim (DE)

(57) **Zusammenfassung**

Die Erfindung betrifft einen Fahrzeugsitz (1) für ein Nutzfahrzeug mit einem eine Sitzstruktur (11) tragenden Sitzunterbau (2), wobei der Sitzunterbau (2) fahrzeugfest gehaltert ist und die Sitzstruktur an dem Sitzunterbau über eine regelbare Stützvorrichtung (6) beweglich gelagert ist. Eine Regelvorrichtung (4) steuert dabei das Übertragungsverhalten der Stützvorrichtung, um ein möglichst vibrationsarmes Fahren zu ermöglichen. Um die Regelung möglichst feinfühlig zu gestalten, ist vorgesehen, dass die Stützvorrichtung (6) für je einen Freiheitsgrad drei Sensoren aufweist, wobei ein fahrzeugfest angeordneter erster Sensor (25, 35) zur Aufnahme der Fahrzeugbeschleunigung dient und ein zweiter sitzstrukturfest angeordneter zweiter Sensor zur Aufnahme (26, 36) der Sitzstrukturbeschleunigung dient und ein dritter Sensor (27, 37) zur Aufnahme der Relativbewegung zwischen Sitzstruktur und Fahrzeug vorgesehen ist.

## Beschreibung

Die Erfindung betrifft einen Fahrzeugsitz, insbesondere für ein Nutzfahrzeug, nach den Merkmalen des Oberbegriffs des Anspruchs 1.

Aus der JP 09109757 A ist ein Fahrzeugsitz bekannt, der eine aktive Sitzfederung mittels elektrischer Aktoren aufweist. Dort werden Vibrationen, die vom Fahrzeugboden in den Fahrzeugsitz eingeleitet werden, mittels eines Vibrationssensors erfasst. Am Sitz selbst ist ein zweiter Beschleunigungssensor angeordnet, der die Beschleunigung des Sitzes misst. Diese beiden Signale werden in einer Regelungselektronik zur Ansteuerung des elektrischen Aktors verarbeitet.

Die der vorliegenden Erfindung zugrundeliegende Aufgabe ist es, einen Fahrzeugsitz mit aktiver Sitzfederung zu schaffen, der besonders komfortabel ist und dabei eine feinfühlige Regelung aufweist.

Diese Aufgabe wird erfindungsgemäß durch einen Fahrzeugsitz mit den Merkmalen des Anspruchs 1 gelöst.

Der Fahrzeugsitz weist eine Sitzstruktur auf, die einen fahrzeugfest gehalterten Sitzunterbau sowie vorzugsweise eine Rückenlehne und ein mit dieser verbundenes Sitzkissen umfasst, welches über eine Stützvorrichtung in zumindest einem Freiheitsgrad beweglich an dem Sitzunterbau gelagert ist. An dem Sitzkissen kann die Rückenlehne z. B. über einen Lehnenbeschlag in der Neigung verstellbar befestigt sein. Eine Regelvorrichtung mit Sensoren regelt das Übertragungsverhalten der Stützvorrichtung. Dabei ist vorgesehen, dass die Stützvorrichtung für je einen geregelten Freiheitsgrad jeweils einen fahrzeugfest angeordneten ersten Sensor zur Aufnahme der Fahrzeugbeschleunigung aufweist sowie einen sitzstrukturfest, vorzugsweise am Sitzkissen angeordneten zweiten Sensor zur Aufnahme der Beschleunigung der Sitzstruktur, vorzugsweise der Sitzkissenbeschleunigung aufweist und zudem einen dritten Sensor aufweist, der zur Aufnahme der Relativbewegung zwischen der Sitzstruktur, vorzugsweise des Sitzkissens und dem Fahrzeug ausgebildet ist. Mit Freiheitsgrad ist dabei eine Bewegung entlang einer Achse oder eine Dreh- oder Nickbewegung um eine Achse gemeint. Es kann z. B. eine Bewegung der Sitzstruktur bzw. des Sitzkissens entlang der Fahrzeughochachse, der in Fahrtrichtung gesehenen Fahrzeuglängsachse oder der in Fahrtrichtung gesehene Fahrzeugquerachse erfolgen. Ebenso ist es möglich, dass der Fahrzeugsitz mehrere Freiheitsgrade aufweist, d. h. dass eine Bewegung entlang mehrerer solcher Achsen möglich ist.

Die Stützvorrichtung weist für jeweils einen solchen Freiheitsgrad drei Sensoren auf, wobei zwei Beschleunigungssensoren zur Aufnahme der Fahrzeugbeschleunigung und zur Aufnahme der Sitzbeschleunigung an der Sitzstruktur, vorzugsweise am Sitzkissen bzw. an einem mit der Sitzstruktur verbundenen Bauteil ausgebildet sind, und ein weiterer Sensor zur Aufnahme der Relativbewegung bzw. der Relativposition zwischen der Sitzstruktur, bzw. dem Sitzkissen und dem Fahrzeug dient. Diese Sensoren bilden die Eingangsgrößen für die Regelvorrichtung, d. h. die Sensoren sind mit der Regelvorrichtung verbunden und dienen der Regelvorrichtung als Grundlage zum Verändern des Übertragungsverhaltens der Stützvorrichtung derart, dass ein möglichst vibrations- und schwingungsarmes Sitzen auf dem Fahrzeugsitz durch Ausgleich der durch das Fahrzeug verursachten Stöße und/oder Schwingungen ermöglicht wird.

Dabei kann das Übertragungsverhalten der Stützvorrichtung, die je geregeltem Freiheitsgrad ein Feder/Dämpferpaar und einen parallel zu dem Feder/Dämpferpaar angeordneten Aktor, vorzugsweise einen Linearmotor, aufweist, beeinflusst werden, indem die Federkennlinie und/oder die Dämpferkennlinie und/oder die Stellkraft und/oder der Stellweg des Aktors gesteuert wird.

Die Sitzstruktur bezeichnet dabei die beweglichen, vorzugsweise gefedert gelagerten Teile des Fahrzeugsitzes, wie das Sitzkissen, die Rückenlehne und einen diese verbindenden Sitzrahmen. Diese Teile sind untereinander verbunden, so dass eine Bewegung der Sitzstruktur durch Vermessen eines der Teile, z. B. des Sitzkissens oder der Rückenlehne oder des Sitzrahmens erfolgen kann.

Über die Regelungsvorrichtung wird anhand der Messgrößen aktiv das Übertragungsverhalten der Stützvorrichtung beeinflusst. Somit kann der Sitzkomfort im Fahrzeug maßgeblich verbessert werden. Dabei ist vorgesehen, dass die Regelungsvorrichtung die mechanisch vorhandenen Feder- und Dämpferelemente des Sitzes, wie z. B. das Verhalten des Sitzkissens oder einer elastischen Sitzaufhängung berücksichtigt und zudem aktiv das Übertragungsverhalten der Stützvorrichtung derart steuert, d. h. die Federkennlinie und/oder Dämpferkennlinie und/oder den Aktor derart steuert, dass möglichst wenig Schwingungen vom Fahrzeug auf den Fahrzeugsitz übertragen werden.

Dabei hat sich gezeigt, dass sich das Regelungsverhalten deutlich verbessern lässt, indem als Eingangsinformation für die Regelvorrichtung neben den Beschleunigungswerten auch die Relativposition des Sitzes zum Fahrzeug ermittelt wird, da so eine besonders feinfühlige Steuerung ermöglicht wird.

Insbesondere ist vorgesehen, dass die Stützvorrichtung der Sitzstruktur, insbesondere des Sitzkissens in einem Freiheitsgrad jeweils eine Stützfeder und einen Stützdämpfer aufweist. Die Regelungsvorrichtung kann dabei das Übertragungsverhalten der Stützvorrichtung steuern, indem sie entweder die Federkennlinie der Stützfeder oder die Dämpferkennlinie der Stützfeder oder beides gemeinsam steuert oder parallel dazu entsprechende Kräfte stellt, die von einem parallel zu der Stützfeder und/oder dem Stützdämpfer arbeitenden Aktor, vorzugsweise einem elektrischen oder elektrohydraulischen Linearmotor, abhängig von dessen Eingangssignal, erzeugt werden. Dieser Linearmotor ist mit seinem einen Ende mit dem Sitzunterbau und mit seinem anderen Ende mit der Sitzstruktur verbunden.

In einer Ausführung ist vorgesehen, dass der Stützdämpfer einen elektrischen oder pneumatischen oder hydraulischen Aktor aufweist, der vorzugsweise parallel zu der Stützfeder angeordnet ist. Insbesondere ist der Aktor als Linearmotor ausgebildet, der zwischen der Sitzstruktur und dem Sitzunterbau angeordnet ist. Mittels eines solchen Aktors kann das Übertragungsverhalten der Stützvorrichtung durch die Regelungsvorrichtung in weitem Maße beeinflusst und somit die Regelung besonders feinfühlig gesteuert werden.

In einer Ausführung ist vorgesehen, dass die Regelvorrichtung für jeweils einen geregelten Freiheitsgrad, z. B. in x-Richtung, in y-Richtung oder in z-Richtung, jeweils einen separaten Regelkreis aufweist. Der erste Freiheitsgrad ist dabei die vertikale Auf- und Abbewegung des Sitzes in Richtung der Fahrzeughochachse, also die z-Achse. Ein zweiter Freiheitsgrad kann dabei die Bewegung des Sitzes in Fahrzeuglängsrichtung, also die x-Achse, sein. Zudem kann ein dritter Freiheitsgrad berücksichtigt werden, der z. B. die Fahrzeugquerachse, die y-Achse, umfasst. Alternativ kann auch ein weiterer Bewegungsfreiheitsgrad eine Nick- oder Rollbewegung um eine Längs- oder Querachse des Sitzes berücksichtigen und mittels der Stützvorrichtung entsprechend ausgeregelt werden.

Ziel der Regelung ist ein vibrationsfreies Sitzen. Das bedeutet, dass die Zustandsgrößen des Sitzes zu Null zu regeln sind und der Entwurf der Regelung optimal bzgl. des Störverhaltens vorzunehmen ist. Wird die Sitzregelung in eine übergeordnete Fahrdynamikregelung integriert, dann kann sich unter ergonomischen Aspekten das Führen der Sitzbewegung über die Sollwerte als vorteilhaft erweisen, was hier nicht näher betrachtet wird.

In einer Ausführung ist vorgesehen, dass in der Regelvorrichtung Kompensationsmaßnahmen, vorzugsweise ein Entkopplungsnetzwerk, vorgesehen sind, die inhärente Kopplungen zwischen den einzelnen Freiheitsgraden ausgleichen. Die Regelvorrichtung ist insbesondere so ausgebildet, dass je geregeltem Freiheitsgrad die Signale des ersten Sensors und des zweiten Sensors und des dritten Sensors als Messgrößen für die Ermittlung einer Stellgröße zur Ansteuerung der Stützvorrichtung gemäß eines für den jeweiligen Freiheitsgrad vorgegebenen oder gewünschten Störübertragungsverhaltens verwendet wird. Insbesondere lässt sich eine Störgrößenaufschaltung parametrisieren, vorzugsweise durch Feed Forward-Kompensation.

In einer vorteilhaften Ausführung ist vorgesehen, dass die Regelvorrichtung ein Störübertragungsverhalten aufweist, die sich aus der Kombination eines Vibrationsreglers und eines Positionsreglers ergibt. Insbesondere ist vorgesehen, dass die Regelvorrichtung dem Vibrationsregler als Messgrößen die Beschleunigungswerte des ersten Sensors und/oder des zweiten Sensors zuführt. Der Vibrationsregler ermittelt dann aus den zugeführten Beschleunigungswerten die jeweils zugehörigen Geschwindigkeitswerte und die zugehörigen Positionswerte durch approximierende Integration. Dadurch wird eine Beobachterstruktur der Zustandsregelung umgesetzt.

Weiterhin kann vorgesehen sein, dass die Regelvorrichtung dem Positionsregler als Messgröße die Relativpositionswerte des dritten Sensors zuführt. Dadurch kann ein PID-Regler umgesetzt werden.

Es ist vorgesehen, den erfindungsgemäßen Fahrzeugsitz in Nutfahrzeugen, d. h. in schweren Nutzfahrzeugen, wie z. B. in LKWs oder Baumaschinen, als auch in leichten Nutzfahrzeugen, wie z. B. Transporterfahrzeuge, zu verwenden. Ebenso ist vorgesehen, den erfindungsgemäßen Fahrzeugsitz in einem Personenkraftwagen als besonders komfortabel geregelten Fahrer-und/oder Beifahrersitz zu verwenden.

Die Erfindung ist anhand eines in den Zeichnungen näher dargestellten Ausführungsbeispiels im Folgenden näher beschrieben.

Es zeigen:
- Fig. 1: eine schematische Seitenansicht eines von einem Fahrer belegten Fahrzeugsitzes mit Sitzunterbau, Sitzkissen und Rückenlehne,
- Fig. 2: eine schematische Ansicht einer Regelungsvorrichtung für einen aktiv geregelten Fahrzeugsitz,
- Fig. 3: eine schematische Reglerstruktur für einen Freiheitsgrad des aktiv geregelten Fahrzeugsitzes.

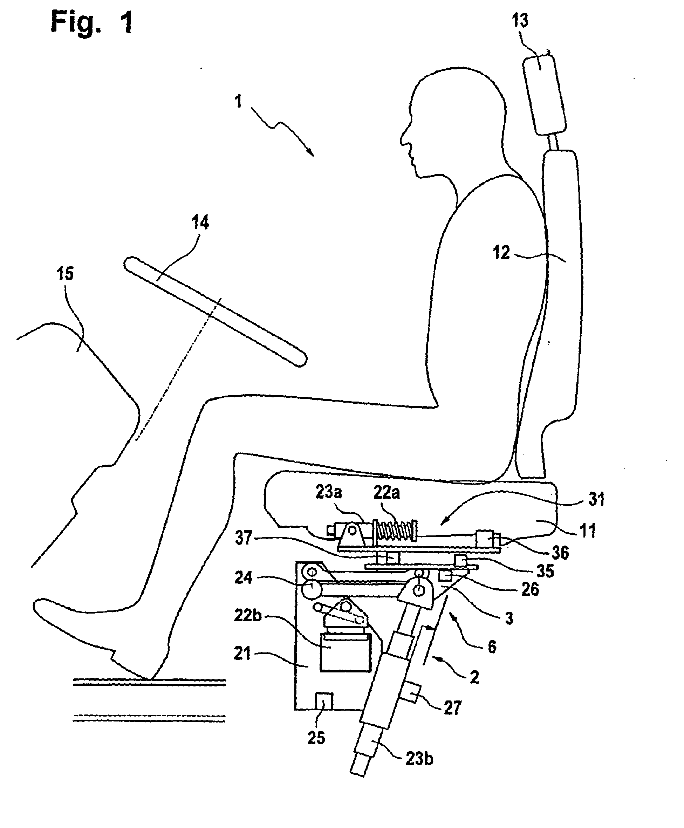

In Figur 1 ist in schematischer Seitenansicht ein mit einem Fahrer besetzter Fahrzeugsitz 1 dargestellt. Der Fahrzeugsitz ist in einer Nutzfahrzeugkabine angeordnet, wobei in der Figur 1 schematisch die Armaturentafel 15 sowie ein Lenkrad 14 und der Fahrzeugkabinenboden angedeutet ist. Anhand der Teile lässt sich die relative Einbaulage des Fahrzeugsitzes im Fahrerhaus erkennen.

Der Fahrzeugsitz weist eine Sitzstruktur mit einem Sitzunterbau 2, der mit dem Fahrzeugboden fest verbunden ist, auf. Oben auf dem Sitzunterbau 2 ist über ein Sitzpodest 3 das Sitzkissen 11 gelagert. Das Sitzkissen 11 ist über einen Sitzrahmen mit der Rückenlehne 12 des Fahrzeugsitzes verbunden. Am oberen Ende der Rückenlehne 12 ist eine Kopfstütze 13 angeordnet.

Zwischen dem Sitzunterbau 2 und dem Sitzkissen 11 tragenden Sitzpodest 3 ist eine Stützvorrichtung 6 angeordnet, die das Sitzkissen beweglich mit dem fahrzeugfesten Sitzunterbau verbindet. Die Bewegung des Sitzkissens kann als Indikator für eine Bewegung der gesamten Sitzoberfläche benutzt werden, da das Sitzkissen mit der Rückenlehne fest verbunden ist. Die Stützvorrichtung 6 lagert das Sitzkissen 11 und somit auch die an dem Sitzkissen gehalterte Rückenlehne beweglich an dem Sitzunterbau 2, wobei das Sitzkissen 11 in Richtung der Fahrzeughochachse, der z-Richtung, und in Richtung der Fahrzeuglängsachse, der x-Richtung, beweglich gelagert ist. Somit weist der Fahrzeugsitz in Figur 1 zwei Freiheitsgrade z und x auf. Die Stützvorrichtung 6 weist ein steuerbares Übertragungsverhalten auf, wobei das Übertragungsverhalten der Stützvorrichtung 6 durch eine Regelvorrichtung 4 steuerbar ist.

Der Sitzunterbau 2 weist einen Stützträger 21 auf, der fest mit dem Fahrzeugboden verbunden ist. An dem Stützträger 21 ist ein Stützdämpfer 23b sowie eine Stützfeder 22b angeordnet, die an ihrem einen Ende mit dem Stützträger 21 verbunden sind und an ihrem andern Ende mit einem Parallelogrammlenkergestänge 24 verbunden sind. Das Parallelogrammlenkergestänge 24 ermöglicht eine Bewegung der Sitzstruktur in Form des Sitzkissens 11 mit Rückenlehne in z-Richtung und gewährleistet dabei eine Parallelverschiebung des mit dem Parallelogrammlenker 24 verbundenen Sitzpodests 3 bei allen Schwenk-und Schwingbewegungen des Fahrzeugsitzes 1.

Die Bewegung des Fahrzeugsitzes 1 in z-Richtung wird dabei von dem Feder/Dämpfersystem 22b, 23b bestimmt. Das Übertragungsverhalten dieses Federdämpfersystems, welches einen Teil der Stützvorrichtung 6 des Fahrzeugsitzes darstellt, ist durch Steuern der Kennlinie, insbesondere der Stellkräfte des Dämpfers 23b veränderbar. Der Dämpfer 23b weist einen elektrischen Linearmotor auf, der zwischen Sitzkissen 11 und Sitzunterbau 2 angeordnet ist. Er kann so die Schwingungsamplituden des Sitzes in z-Richtung ausgleichen.

Dem Freiheitsgrad in z-Richtung zugeordnet sind drei Sensoren, wobei ein erster Sensor 25 am Stützträger 21 fahrzeugfest angeordnet ist. Dieser erste Sensor 25 ist als Beschleunigungssensor ausgebildet und nimmt die Beschleunigungswerte des Fahrzeugs bzw. der Fahrzeugkabine auf. Ein zweiter Sensor 26 ist am Sitzpodest 3 sitzstrukturfest, d. h. in dem dargestellten Beispiel sitzkissenfest angeordnet und ist ebenfalls als Beschleunigungssensor 26 ausgebildet. Dieser zweite Beschleunigungssensor 26 dient zur Aufnahme der Beschleunigungswerte des Sitzkissens 11. Weiterhin ist für den Freiheitsgrad z ein dritter Sensor 27 vorgesehen, welcher am Dämpfer 23b angeordnet ist und die Relativposition des Sitzpodestes 3 bzw. des Sitzkissens 11 im Verhältnis zum Sitzunterbau, bzw. des Fahrzeugs bzw. der Fahrzeugkabine bestimmt. Die drei Sensoren 25,26,27 sind mit der Regelvorrichtung 4 verbunden und liefern an diese die relevanten Messgrößen für den Freiheitsgrad z.

Das Sitzpodest 3 weist einen Schlitten 31 auf, der eine Bewegung der Sitzstruktur und damit des Sitzkissens 11 in Fahrzeuglängsrichtung erlaubt. Die Fahrzeuglängsrichtung verläuft dabei in Fahrtrichtung. Die Bewegung des Schlittens 31 wird dabei von dem Feder/Dämpfersystem, bestehend aus der Feder 22a und dem Dämpfer 23a, kontrolliert. Der Dämpfer 23a weist dabei einen elektrischen Linearmotor auf, der von der Regelvorrichtung 4 angesteuert wird, um das Schwingungsverhalten des Fahrzeugsitzes in x-Richtung zu regeln.

Weiterhin sind an dem Schlitten 31 drei Sensoren angeordnet, die dem Freiheitsgrad x zugeordnet sind. Ein erster Beschleunigungssensor 35 ist fahrzeugfest mit dem Sitzpodest 3 verbunden, so dass die Schwingungen in x-Richtung der Fahrzeugkabine von diesem Beschleunigungssensor 35 aufgenommen werden. Ein zweiter Beschleunigungssensor 36 ist an dem Schlitten 31 so angeordnet, dass er sitzkissenfest mit dem Sitzkissen 11 verbunden ist und dadurch die Beschleunigungswerte des Sitzkissens 11 aufnimmt. Der dritte Sensor 37 ist an dem Schlitten 31 bzw. an dem Dämpfer 23a so angeordnet, dass er die Relativposition des Sitzkissens im Verhältnis zu der Fahrzeugkabine bzw. dem Sitzpodest 3 aufnimmt. Diese drei Sensoren 35, 36, 37 liefern die Messgrößen für die Regelungsvorrichtung 4 für den Freiheitsgrad in x-Richtung.

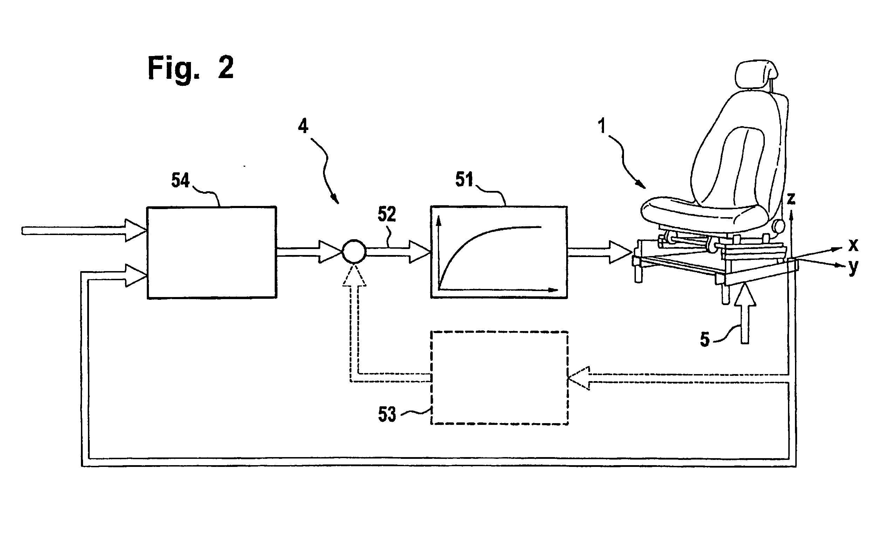

In der Figur 2 ist der grundsätzliche schematische Aufbau der Regelungsvorrichtung 4 für die aktive Federung des Fahrzeugsitzes dargestellt. Der Fahrzeugsitz 1 weist drei Freiheitsgrade in x-, und/oder y- und/oder z-Richtung und/oder rotatorische Freiheitsgrade um die Fahrzeuglängs- oder Fahrzeugquerachse auf. Die Bewegung des Sitzes 1 in jedem dieser Freiheitsgrade wird über jeweils drei Sensoren aufgenommen, die wie unter Figur 1 beschrieben angeordnet sind. Dabei sind jeweils ein Beschleunigungssensor am Sitz sowie ein weiterer Beschleunigungssensor am Fahrzeug sowie ein Positionssensor, der die Position des Fahrzeugsitzes 1 relativ zum Fahrzeug erfasst, vorgesehen und in die Regelungsvorrichtung 4 eingebunden.

Der Signalfluss der von den Sensoren erfassten Messgrößen ist in der Figur 2 durch Pfeile angedeutet. Ziel der Regelung ist vibrationsfreies Sitzen. Dies bedeutet, dass die Zustandsgrößen des Sitzes zu Null zu regeln sind und der Entwurf der Regelung optimal bzgl. des Störverhaltens vorzunehmen ist.

Wird in die Sitzregelung in eine übergeordnete Fahrdynamikregelung integriert, dann kann sich das Führen der Sitzbewegung über die Sollwerte als vorteilhaft erweisen, was hier aber nicht näher betrachtet wird.

In die Regelungsvorrichtung 4 sind regelungstechnische Maßnahmen integriert, die eine Entkopplung der inhärenten Modellkopplung zwischen den geregelten Freiheitsgraden bewirken. Dadurch lässt sich die komplexe Regelung in Teilmodelle zerlegen, wobei in der Regelungssynthese jeweils entkoppelte Zweimassenschwinger für einen Freiheitsgrad separat betrachtet werden. Diese Teilmodelle werden dann für die Parametrierung des jeweiligen Zustandsreglers der Sitzdynamik unter Einbezug des dynamischen Verhaltens von Aktorik und Sensorik herangezogen. Da beim jeweiligen Teilzustandsregler neben der Beschleunigung auch die Geschwindigkeit und Position zurückgeführt werden, sind die Zustandsgrößen aus dem Beschleunigungssignal durch approximierende Integration zu generieren. Zur Vermeidung von statistischen Anteilen, aufgrund immer vorhandener Offsets in der Praxis, werden die Beschleunigungssignale hochpassgefiltert.

Von entscheidender Bedeutung für die Gesamtdynamik ist die Eckfrequenz der Hochpassfilterung. Mit diesem Parameter wird im Entwurf die Abgrenzung der dynamischen Schwingungsunterdrückung von aktiver Sitzfederung zu der des Fahrwerks vorgenommen. Dies ist zwingend erforderlich, da wegen des bauraumbegrenzten Schwingwegs und der limitierten Aktorkraft niederfrequente Bewegungen auf den Sitz übertragen werden müssen.

Nur die höherfrequenten Vibrationen oberhalb einer festzulegenden Frequenz sind mit der aktiven Sitzfederung zu unterdrücken. Unter Berücksichtigung und Optimierung dieser Parameter lässt sich eine Signalbearbeitung für die Sitzregelung 54 entwerfen, die ein optimiertes Störübertragungsverhalten aufweist und als Reaktion auf die Messgrößen der Beschleunigungssensoren eine Stellgröße 52 für den Aktor bereitstellt. Zudem wird das Übertragungsverhalten 51 des Aktors berücksichtigt, wie auch eine Störgrößenkompensation 53 durchgeführt. Dadurch lässt sich mit dem erfindungsgemäßen Fahrzeugssitz 1 mit aktiver Regelung ein sehr guter Komfortzustand, nämlich ein weitgehend vibrations- und schwingungsfreier Sitz während des Fahrbetriebs erreichen. Der Aufbau der Regelvorrichtung 4 sieht vor, dass für jeden geregelten Freiheitsgrad ein separates Reglermodell zugrundegelegt wird und eine separate Regelungssynthese erfolgt.

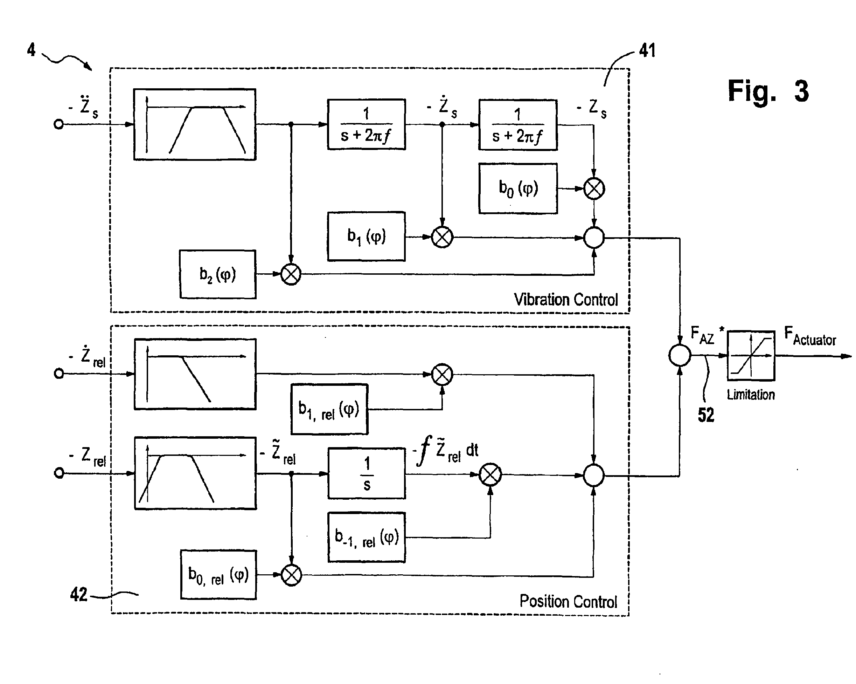

In Figur 3 ist schematisch die Reglerstruktur eines solchen Freiheitsgrades dargestellt. Da es notwendig ist, große Relativbewegungen zwischen Kabine und dem Fahrzeugsitz bzw. Insassen zu unterdrücken, ist es notwendig, niederfrequente Schwingungen mit großer Schwingungsamplitude weitgehend von der Konsole auf den Sitz zu übertragen. Daher wurde der in Figur 3 dargestellte Regler 4 entworfen, der zum einen einen Positionsregler 42 aufweist, der die Übertragung niederfrequenter Schwingungen bewerkstelligt. Andererseits weist die Reglerstruktur 4 einen Vibrationsregler 41 mit Zustandsreglerstruktur zur Unterdrückung der höherfrequenten Schwingungen auf. Die Abgrenzung der jeweiligen Wirkung der Regler, die in ihrer Struktur parallel einen Eingriff vornehmen, wird dabei durch geeignete Filterung der verwendeten Messgrößen vorgenommen. Dabei trägt die Reglerstruktur dazu bei, große Relativbewegungen bei gleichzeitig möglichst guter Schwingungsunterdrückung zu vermeiden.

Als Messgrößen für den Regler 4 stehen dabei die Beschleunigungen des Sitzes zur Verfügung, die als Eingangsgrößen dem Vibrationsregler 41 zur Minimierung der Schwingungsbelastung dienen. Zum anderen werden die seitens der Aktorik zur Verfügung stehenden Relativbewegungen zwischen Sitzstruktur bzw. dem Sitzkissen 11 und Sitzunterbau 2 herangezogen, die dem Positionsregler 42 als Messgrößen zugeführt werden. In Figur 3 ist dies exemplarisch für den Freiheitsgrad in z-Richtung dargestellt. Die Strukturen der anderen Freiheitsgrade ergeben sich analog durch Austausch der Eingangsgrößen für die jeweiligen Freiheitsgrade.

Da beim Vibrationsregler 41 neben der gemessenen Beschleunigung zusätzlich intern auch die Geschwindigkeit und Position zurückgeführt werden, sind diese Zustandsgrößen aus dem gemessenen Beschleunigungssignal durch approximierende Integration zu generieren. Dadurch wird eine Beobachterstruktur der Regelung umgesetzt. Da in der Praxis immer Offsets vorhanden sind, werden die Beschleunigungssignale hochpassgefiltert.

Von entscheidender Bedeutung für die Gesamtdynamik der Regelungsvorrichtung ist dabei die Eckfrequenz der Hochpassfilterung. Mit diesem Parameter wird im Entwurf die Abgrenzung der dynamischen Schwingungsunterdrückung von aktiver Sitzfederung zu der des Aufbaus vorgenommen.

Der in Figur 3 dargestellte Positionsregler 42 verwendet die Relativgrößen zwischen Konsole, d. h. der Fahrzeugkabine, und der Sitzstruktur bzw. dem Sitzkissen 11, d. h. dem Sitzpodest 3. Theoretisch würde es ausreichen, lediglich die Relativposition z-relativ zurückzuführen. Die weiteren Größen können dann durch Differentiation und Integration aus dieser Größe gewonnen werden, nach Art eines PID-Reglers.

Die Darstellung in Figur 3 ist für die anderen Freiheitsgrade entsprechend zu verwenden, wobei dann für den Freiheitsgrad x die Größen z durch x zu ersetzen sind und für den Freiheitsgrad y die Größen z durch y zu ersetzen sind. Ebenso kann die in Figur 3 dargestellte Reglerstruktur auf einen Neigefreiheitsgrad angewendet werden, dabei muss dann anstatt der Wegeinformation z der Neigefreiheitsgrad α als Winkelinformation für z eingesetzt werden.

## Patentansprüche

1. Fahrzeugsitz, insbesondere für ein Nutzfahrzeug, mit einer Sitzstruktur mit einem Sitzkissen und einer mit diesem verbundenen Rückenlehne, sowie einem die Sitzstruktur tragenden Sitzunterbau, wobei der Sitzunterbau fahrzeugfest gehaltert ist und die Sitzstruktur, vorzugsweise das Sitzkissen an dem Sitzunterbau über eine Stützvorrichtung in zumindest einem Freiheitsgrad beweglich gelagert ist, wobei die Stützvorrichtung eine Regelvorrichtung mit Sensoren zum Regeln des Übertragungsverhaltens der Stützvorrichtung aufweist,
**dadurch gekennzeichnet,**
**dass** die Stützvorrichtung (6) in einem geregelten Freiheitsgrad einen fahrzeugfest angeordneten ersten Sensor (25,35) zur Aufnahme der Fahrzeugbeschleunigung und einen sitzstrukturfest angeordneten zweiten Sensor (26,36) zur Aufnahme der Sitzstrukurbeschleunigung und einen dritten Sensor (27,37) zur Aufnahme der Relativbewegung zwischen Sitzstruktur (11) und Fahrzeug aufweist, deren Signale als Messgrößen für die Regelvorrichtung dienen, so dass diese anhand der Messgrößen eine Stellgröße für einen Aktor zum Regeln des Übertragungsverhaltens der Stützvorrichtung (6) in diesem Freiheitsgrades ermittelt.

2. Fahrzeugsitz nach Anspruch 1,
**dadurch gekennzeichnet,**
**dass** die Sitzstruktur, vorzugsweise das Sitzkissen (11) in zwei Freiheitsgraden, vorzugsweise vertikal und längs zur Fahrtrichtung, beweglich gelagert ist und die Stützvorrichtung (6) für die beiden Freiheitsgrade je einen fahrzeugfest angeordneten ersten Sensor (25,35) zur Aufnahme der Fahrzeugbeschleunigung und einen sitzstrukturfest, vorzugsweise sitzkissenfest angeordneten zweiten Sensor (26,36) zur Aufnahme der Sitzbeschleunigung und einen dritten Sensor (27,37) zur Aufnahme der Relativbewegung zwischen Sitzstruktur, vorzugsweise Sitzkissen (11) und Fahrzeug aufweist.

3. Fahrzeugsitz nach Anspruch 1 oder 2,
**dadurch gekennzeichnet,**
**dass** die Stützvorrichtung (6) in einem Freiheitsgrad eine Stützfeder (22a,22b) und einen Stützdämpfer (23a,23b) aufweist, wobei die Regelungsvorrichtung (4) das Übertragungsverhalten der Stützvorrichtung in diesem Freiheitsgrad durch Steuern der Federkennlinie der Stützfeder (22a,22b) und/oder durch Steuern der Dämpferkennlinie des Stützdämpfers (23a,23b) regelt.

4. Fahrzeugsitz nach Anspruch 3,
**dadurch gekennzeichnet,**
**dass** der Stützdämpfer (23a,23b) einen elektrischen oder pneumatischen oder hydraulischen Aktor, insbesondere Linearmotor, aufweist.

5. Fahrzeugsitz nach einem der Ansprüche 1 bis 4,
**dadurch gekennzeichnet,**
**dass** die Regelvorrichtung (4) für einen geregelten Freiheitsgrad (x,y,z) jeweils einen separaten Regelkreis aufweist.

6. Fahrzeugsitz nach einem der Ansprüche 1 bis 5,
**dadurch gekennzeichnet,**
**dass** die Regelvorrichtung (4) je Freiheitsgrad die Signale des ersten Sensors (25,35) und des zweiten Sensors (26,36) und des dritten Sensors (27,37) als Messgrößen für die Ermittlung einer Stellgröße zur Ansteuerung der Stützvorrichtung (6), gemäß eines für den jeweiligen Freiheitsgrad vorgegebenen Störübertragungsverhaltens, verwendet.

7. Fahrzeugsitz nach Anspruch 6,
**dadurch gekennzeichnet,**
**dass** die Regelvorrichtung (4) ein Störübertragungsverhalten aufweist, das sich aus der Kombination eines Vibrationsreglers (41) und eines Positionsreglers (42) ergibt.

8. Fahrzeugsitz nach Anspruch 7,
**dadurch gekennzeichnet,**
**dass** die Regelvorrichtung (4) dem Vibrationsregler (41) als Messgröße Beschleunigungswerte des ersten Sensors (25,35) und/oder zweiten Sensors (26,36) zuführt.

9. Fahrzeugsitz nach Anspruch 8,
**dadurch gekennzeichnet,**
**dass** der Vibrationsregler (41) aus den zugeführten Beschleunigungswerten die zugehörigen Geschwindigkeitswerte und die zugehörigen Positionswerte ermittelt.

10. Fahrzeugsitz nach einem der Ansprüche 7 bis 9,
**dadurch gekennzeichnet,**
**dass** die Regelvorrichtung (4) dem Positionsregler (42) als Messgröße die Relativpositionswerte des dritten Sensors (27,37) zuführt.

11. Fahrzeugsitz nach Anspruch 10,
**dadurch gekennzeichnet,**
**dass** der Positionsregler (4) aus den zugeführten Relativpositionswerten die zugehörigen Geschwindigkeitswerte ermittelt.
